# EUROPÄISCHE PATENTANMELDUNG

(11) **EP 3 719 756 A1**
(43) Veröffentlichungstag der Anmeldung: **07.10.2020**
(21) Anmeldenummer: 20163334.4
(22) Anmeldetag: 16.03.2020
(51) Int. Cl.: G06T 17/20, G06T 7/12

(54) **3D UMFELDABTASTUNG**

(30) Priorität: 04.04.2019 DE 102019204837
(71) Anmelder: BSH Hausgeräte GmbH, 81739 München (DE)
(72) Erfinder: Fremerey, Maximilian, 97616 Bad Neustadt/Saale (DE); Haug, Sebastian, 70771 Leinfelden-Echterdignen (DE); Sung, Alexander, 72072 Tübingen (DE)

(57) **Zusammenfassung**

Ein Verfahren zum Bereitstellen von Umgebungsdaten eines autonomen Roboters umfasst Schritte des Abtastens eines Objekts in einem Umfeld des Roboters in einem vorbestimmten Sichtfeld, wobei das Abtasten eine Vielzahl Messungen umfasst, die jeweils einen Punkt an der Oberfläche des Objekts bezüglich des Roboters beschreiben; des Bestimmens von Messungen, die einer ebenen Fläche des Objekts zugeordnet sind; des Verwerfens mehrerer Messungen, die der Fläche zugeordnet sind; und des Bereitstellens der verbleibenden Messungen der Abtastung.

## Beschreibung

Vorliegende Erfindung betrifft einen autonomen Roboter, z.B. einen Bodenbearbeitungsroboter. Insbesondere betrifft die Erfindung die dreidimensionale Abtastung eines Umfelds des Bodenbearbeitungsroboters.

Ein Bodenbearbeitungsroboter ist dazu eingerichtet, eine Bodenfläche autonom zu befahren. Der Bodenbearbeitungsroboter kann sein Umfeld berührungslos abtasten und eine Umgebungskarte erstellen oder seine Position bezüglich einer bestehenden Umgebungskarte bestimmen.

US 9 408 515 B2 schlägt einen Bodenreinigungsroboter mit einer Abtasteinrichtung vor. Ein mittels der Abtasteinrichtung bestimmtes Hindernis kann von dem Bodenreinigungsroboter automatisch umfahren werden.

Aktuell sind dreidimensionale Umfeldsensoren verfügbar geworden, die eine verbesserte berührungslose Abtastung ermöglichen. Allerdings sind dreidimensionale Messungen umfangreicher als zweidimensionale, sodass eine Verarbeitung bereitgestellter Daten hinsichtlich Speicherplatz oder Verarbeitungskapazität einer Vorrichtung problematisch sein kann.

EP 2 947 533 A2 betrifft einen Bodenreinigungsroboter mit einer berührungslosen dreidimensionalen Abtasteinrichtung, der dazu eingerichtet ist, seine eigene Position auf der Basis erkannter Objekte oder Punkte zu bestimmen.

Eine der vorliegenden Erfindung zu Grunde liegende Aufgabe besteht in der Angabe einer verbesserten Technik zur dreidimensionalen Abtastung eines Umfelds eines autonomen Roboters, insbesondere Bodenbearbeitungsroboters. Die Erfindung löst diese Aufgabe mittels der Gegenstände der unabhängigen Ansprüche. Unteransprüche geben bevorzugte Ausführungsformen wieder.

Ein Verfahren zum Bereitstellen von Umgebungsdaten eines autonomen Roboters, insbesondere Bodenbearbeitungsroboters umfasst Schritte des Abtastens eines Objekts in einem Umfeld des Bodenbearbeitungsroboters in einem vorbestimmten Sichtfeld, wobei das Abtasten eine Vielzahl Messungen umfasst, die jeweils einen Punkt an der Oberfläche des Objekts bezüglich des Bodenbearbeitungsroboters beschreiben; des Bestimmens von Messungen, die einer ebenen Fläche des Objekts zugeordnet sind; des Verwerfens mehrerer Messungen, die der Fläche zugeordnet sind; und des Bereitstellens der verbleibenden Messungen der Abtastung.

Ein Punkt wird allgemein durch seine geometrische Lage bezüglich des Bodenbearbeitungsroboters beschrieben. Für ein hierin beschriebenes Verfahren und eine hierin beschriebe Vorrichtung kann der Punkt alternativ in polaren oder in kartesischen Koordinaten ausgedrückt sein.

Erfindungsgemäß kann eine Anzahl Messungen der Abtastungen um redundante oder irrelevante Informationen reduziert werden, sodass in der Folge weniger Daten verarbeitet werden müssen. Ein erforderlicher Speicherplatz und/oder eine für die Verarbeitung erforderliche Verarbeitungsleistung können reduziert werden. Bevorzugt werden von den der Fläche zugeordneten Messungen möglichst viele verworfen, ohne eine Reproduzierbarkeit der Fläche aufgrund verbleibender Messungen zu gefährden. Das Bestimmen der Fläche und zu verwerfender Messungen kann einfach und schnell erfolgen, sodass das Verfahren für eine Echtzeitverarbeitung geeignet sein kann. Im Gegensatz zu bekannten Kompressionsverfahren können Datenformate eingehender und ausgehender Daten identisch sein. Verbleibende Messungen können unverändert sein, sodass die Informationsreduktion diesbezüglich verlustlos ist.

In einer bevorzugten Ausführungsform ist eine der verworfenen Messungen einem Punkt auf der Fläche zugeordnet, der in einem vorbestimmten Mindestabstand von einer Begrenzung der Fläche liegt. Die Fläche kann insbesondere auf der Basis von Messungen reproduzierbar sein, deren zugeordnete Punkte in einem Randbereich der Fläche liegen. So können Messungen, die zur Bestimmung der Fläche keine zusätzliche Information beisteuern können, entfernt werden. Der Abstand der Punkte ist bevorzugt ihr euklidischer Abstand.

Eine Begrenzung der Fläche kann eine Kante aufweisen, die sich zwischen zwei Ecken erstreckt, wobei eine der verworfenen Messungen einem Punkt auf der Fläche zugeordnet ist, der in einem vorbestimmten Mindestabstand von der Ecke liegt. Die Kante kann als direkte Verbindung der Ecken leicht reproduziert werden, sodass Messungen, die Punkten zugeordnet sind, die zwischen den Ecken liegen, ohne relevanten Informationsverlust entfernt werden können. Die Zugehörigkeit eines Punkts zu einer Kante kann bezüglich seines euklidischen Abstands zur Kante bestimmt werden.

Die Fläche kann insbesondere durch ein Polygon begrenzt sein, wobei eine der verworfenen Messungen im Bereich einer Verbindung von benachbarten Ecken der Fläche liegt. Im Umfeld eines Haushalts ist ein Objekt mit einer ebenen Fläche, die durch ein Polygon begrenzt wird, relativ häufig anzutreffen, beispielsweise in Gestalt eines Möbels, einer Wand oder einer Tür. Aufgrund einer perspektivischen Verzerrung kann die Fläche in der Abtastung als Trapez oder noch allgemeiner als Polygon erscheinen, insbesondere wenn das Sichtfeld nur einen Teil der Fläche abdeckt. Durch die Reduktion von Messungen im Randbereich der Fläche auf ein Polygon kann eine weitere signifikante Reduktion der Messungen erreicht werden. Dabei kann praktisch jede Form von Begrenzung der Fläche durch ein Polygon angenähert werden, sodass auch eine Abtastung einer anders geformten Fläche verarbeitet werden kann. Insgesamt kann es ausreichen, die Fläche durch Messungen zu repräsentieren, die an Ecken eines Polygons liegen, das die Fläche begrenzt. In vielen Fällen kann die Zahl der Messungen einer Fläche so bis auf vier reduziert werden.

In einer weiteren Ausführungsform bleibt eine vorbestimmte Mindestanzahl Messungen, die der Fläche zugeordnet sind, erhalten. Die Mindestanzahl kann einer vorbestimmten Messungsdichte zugeordnet sein. So kann der Einfluss eines Fehlers in einer verbleibenden Messung reduziert werden. Beispielsweise können Messungen, die Punkten in einem zu verwerfenden Bereich der Fläche liegen, systematisch, unsystematisch, pseudo-zufällig oder zufällig ausgewählt und verworfen werden, bis eine vorbestimmte Messungsdichte erreicht ist. In einer anderen Ausführungsform können so lange die jeweils am wenigsten relevanten Messungen verworfen werden, bis die vorbestimmte Messungsdichte erreicht ist. Die Relevanz kann bestimmen, wie gut die Fläche aufgrund der Messung rekonstruiert werden kann bzw. wie viel Information die Messung zu einer Rekonstruktion der Fläche beiträgt.

Das Objekt kann in dem Sichtfeld zusätzlich zweidimensional optisch abgetastet werden, wobei die Fläche des Objekts auf der Basis der optischen Abtastung bestimmt wird. Das optische Abtasten kann einfach und schnell erfolgen. Eine optische Kamera für die optische Abtastung kann kostengünstig sein. Ein Sichtfeld oder eine Auflösung der optischen Kamera können größer sein als das bzw. die eines Entfernungssensors, der die Entfernungsmessungen bereitstellt. Das Bestimmen der Fläche aufgrund der optischen Abtastung kann mit Hilfe bekannter Techniken einfach und schnell durchgeführt werden. Die optische Abtastung kann nach der Bestimmung verworfen werden. Alternativ kann eine optische Abtastung einer Abtastung mit Entfernungsmessungen zugeordnet und weiter verarbeitet oder abgespeichert werden.

Die Fläche kann sich im Wesentlichen senkrecht zu einer durch den Bodenbearbeitungsroboter zu bearbeitenden Bodenfläche erstrecken. Es hat sich gezeigt, dass solche Flächen für die Navigation eines Bodenbearbeitungsroboters besonders relevant sind, da sie zu beachtende räumliche Grenzen eines zu befahrenden Bereichs der Bodenfläche darstellen können. Außerdem können Messungen, die zu einer vertikalen Fläche korrespondieren, anhand ihrer Koordinaten leicht erkannt werden. Dabei sind die Koordinaten bevorzugt kartesisch mit einer Koordinatenachse in vertikaler Richtung.

Messungen, die höher als ein bestimmtes Maß über dem Bodenbearbeitungsroboter liegen, können verworfen werden. In einer Ausführungsform kann ein vorbestimmter Horizont in der Flächenmessung angesetzt werden und alle über diesem Horizont liegenden Messungen können verworfen werden. Beschreibt eine Messung einen Punkt in kartesischen Koordinaten mit einer vertikalen Komponente, so kann diese Komponente mit einem vorbestimmten Schwellenwert verglichen werden. Übersteigt die Komponente den Schwellenwert, kann die Messung verworfen werden. Das Verwerfen von Messungen, die oberhalb des vorbestimmten Horizonts liegen, kann vor oder nach einem hierin beschriebenen Ausdünnen von Messungen an einer ebenen Fläche erfolgen. Bestimmungen, die eine Navigation des Bodenreinigungsroboters nicht betreffen, können so leicht aus der Abtastung entfernt werden. Unnötiger Speicher- oder Verarbeitungsaufwand können so vermieden werden.

In einer Variante kann auf der Basis der bereitgestellten Messungen einer Abtastung das Objekt erkannt werden. Ferner kann auf der Basis der bereitgestellten Messungen einer Abtastung eine Position des Bodenbearbeitungsroboters bestimmt werden. Derartige Schritte können dem eigentlichen Reduktionsverfahren nachgeordnet sein. Zwischen dem Bereitstellen der reduzierten Abtastung und einer weiteren Verarbeitung kann die Abtastung auch abgespeichert oder mittels einer Kommunikationsverbindung übermittelt werden. In einer weiteren Ausführungsform wird der Bodenbearbeitungsroboter auf der Basis der bereitgestellten Abtastungen gesteuert. Insbesondere kann eine Bewegung des Bodenbearbeitungsroboters über die Bodenfläche bestimmt oder gesteuert werden, die eine Kollision mit einem Objekt im Umfeld vermeidet.

Nach einem weiteren Aspekt der Erfindung umfasst eine Vorrichtung zur Bereitstellung von Umgebungsdaten an Bord eines autonomen Roboters, insbesondere Bodenbearbeitungsroboters einen Entfernungssensor zur Durchführung einer Abtastung eines Objekts in einem Umfeld des Bodenbearbeitungsroboters in einem vorbestimmten Sichtfeld; wobei das Abtasten eine Vielzahl Messungen umfasst, die jeweils einen Punkt an der Oberfläche des Objekts bezüglich des Bodenbearbeitungsroboters beschreiben; und eine Verarbeitungsvorrichtung. Dabei ist die Verarbeitungsvorrichtung dazu eingerichtet, Messungen zu bestimmen, die einer ebenen Fläche des Objekts zugeordnet sind; mehrere Messungen zu verwerfen, die der Fläche zugeordnet sind; und die verbleibenden Messungen der Abtastung bereitzustellen.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Vorrichtung kann einen Entfernungssensor umfassen, insbesondere eine Stereo-Kamera, eine Time-of-Flight Kamera, einen LiDAR-Sensor oder einen Radarsensor. Der Bodenbearbeitungsroboter kann einen oder mehrere weitere Sensoren umfassen, beispielsweise einen optischen Sensor zur Abtastung des Umfelds und/oder einen Positionssensor.

Die Erfindung wird nun unter Bezug auf die beiliegenden Figuren genauer beschrieben, in denen:
- Figur 1: einen beispielhaften Bodenbearbeitungsroboter;
- Figur 2: ein Ablaufdiagramm eines beispielhaften Verfahrens; und
- Figur 3: ein Beispiel für eine Verarbeitung von abgetasteten Informationen darstellt.

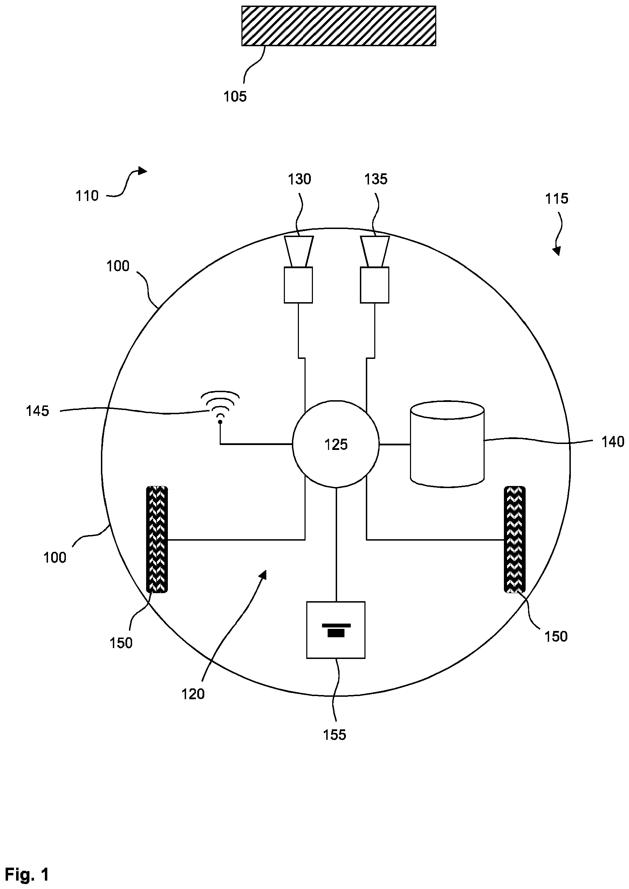

Figur 1 zeigt einen beispielhaften Bodenbearbeitungsroboter 100 und ein Objekt 105 in dessen Umfeld 110. Der Bodenbearbeitungsroboter 100 ist zur Bearbeitung einer Bodenfläche 115 eingerichtet, auf der er sich bevorzugt autonom bewegen kann. Der Bodenbearbeitungsroboter 100 ist bevorzugt zum Einsatz in einem Haushalt vorgesehen, insbesondere zur Bearbeitung der Bodenfläche 115 eines Zimmers, etwa durch Staubsaugen, Kehren oder Wischen, oder einer Außenfläche, beispielsweise eines Rasens, etwa durch Mähen. Das Objekt 105 kann einen beliebigen Gegenstand umfassen, beispielsweise ein Möbel, eine Wand oder eine Tür.

Der Bodenbearbeitungsroboter 100 umfasst eine Vorrichtung 120, die zur Abtastung des Umfelds 110, optional zur weiteren Verarbeitung von abgetasteten Informationen, und weiter optional zur Steuerung des Bodenbearbeitungsroboters 100 auf der Bodenfläche 115 auf der Basis der Informationen eingerichtet ist.

Die Vorrichtung 120 umfasst eine Verarbeitungseinrichtung 125, einen Entfernungssensor 130, sowie optional einen weiteren Sensor 135, eine Speichervorrichtung 140 und/oder eine Übermittlungseinrichtung 145. Die Verarbeitungseinrichtung 125 umfasst bevorzugt einen programmierbaren Mikrocomputer oder eine ähnliche Einrichtung und ist dazu eingerichtet, vom Entfernungssensor 130 bereitgestellte Informationen zu verarbeiten, abzuspeichern und/oder zu übermitteln.

Der Entfernungssensor 130 ist dazu eingerichtet, das Objekt 105 im Umfeld 110 abzutasten und dabei eine Vielzahl Messungen von Entfernungen zum Objekt 105 durchzuführen. Die Messungen einer Abtastung beziehen sich bevorzugt auf unterschiedliche geometrische Orte im Umfeld 110. Insbesondere können jeder Messung eine Entfernung bis zum Objekt 105, eine Elevation, also eine vertikale Richtung, und ein Azimut, also eine horizontale Richtung, zugeordnet sein. Man spricht dann auch von einer polaren Angabe. Dabei kann der Entfernungssensor 130 polar arbeiten, beispielsweise als LiDAR-Sensor.

Eine Messung kann auch in kartesischen Koordinaten ausgedrückt werden, wobei ein abgetasteter Punkt des Objekts 105 drei Koordinaten eines dreidimensionalen kartesischen Koordinatensystems aufweisen kann. Achsen des Koordinatensystems werden üblicherweise mit x, y und z bezeichnet, wobei die z-Achse üblicherweise in vertikaler Richtung verläuft. Eine Umwandlung von kartesischen in polare Koordinaten oder umgekehrt ist aufgrund bekannter trigonometrischer Zusammenhänge zwischen den jeweiligen Koordinatensystemen jederzeit möglich.

Der optionale weitere Sensor 135 kann insbesondere zur Bereitstellung von Informationen eingerichtet sein, die zur Positionsbestimmung des Bodenbearbeitungsroboters 100 bezüglich des Objekts 105 genutzt werden können. Beispielsweise kann der Sensor 135 einen Positionssensor, beispielsweise auf der Basis einer Erfassung einer vorbestimmten Positionsmarke im Umfeld 110, umfassen. In einer weiteren Ausführungsform kann der weitere Sensor 135 zur Abtastung eines ähnlichen Bereichs des Umfelds 110 wie der Entfernungssensor 130 eingerichtet sein. Bevorzugt umfasst der weitere Sensor 135 einen optischen Sensor, um ein Bild des Objekts 105 bereitzustellen.

Die Speichervorrichtung 140 ist bevorzugt dazu eingerichtet, zumindest Informationen abzuspeichern, die mittels des Entfernungssensors 130 und optional des weiteren Sensors 135 bestimmt wurden. Es können auch Informationen aufgenommen werden, die Hinweise auf das Objekt 105 im Umfeld 110 geben. Insbesondere kann die Speichervorrichtung 140 eine Umfeld- oder Hinderniskarte aufnehmen, aufgrund derer eine Lage des Objekts 105 bezüglich des Bodenbearbeitungsroboters 100 bestimmt werden kann oder umgekehrt.

Die Übermittlungseinrichtung 145 ist zur Kommunikation mit einer externen Stelle eingerichtet. Insbesondere können Informationen, die auf der Basis einer Abtastung des Umfelds 110 durch den Entfernungssensor 130 bereitgestellt wurden, an die externe Stelle übermittelt werden. Die externe Stelle kann die Informationen verarbeiten und verarbeitete Informationen können mittels der Übermittlungseinrichtung 145 empfangen werden.

Die Verarbeitungseinrichtung 125 kann dazu eingerichtet sein, eine Bewegung des Bodenbearbeitungsroboters 100 auf der Bodenfläche 115 zu steuern. Dazu kann der Bodenbearbeitungsroboter 100 wenigstens eine Antriebseinrichtung 150 und einen Energiespeicher 155 umfassen.

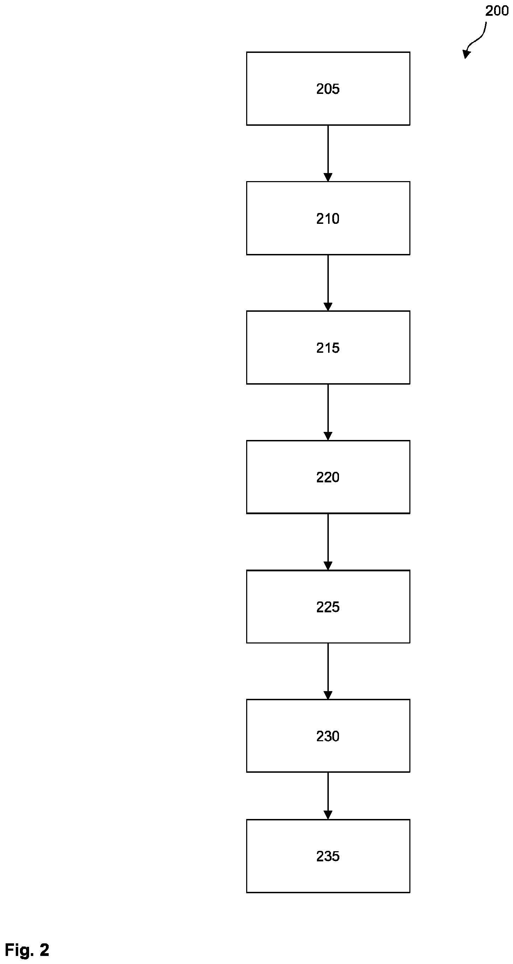

Figur 2 zeigt ein Ablaufdiagramm eines Verfahrens 200, das insbesondere auf der Verarbeitungseinrichtung 125 eines Bodenbearbeitungsroboters 100 ablaufen kann. Es ist zu beachten, dass nicht alle hier gezeigten Schritte vorgesehen sein müssen und dass eine Reihenfolge der Schritte auch verändert werden kann.

In einem Schritt 205 wird das Umfeld 110 mittels des Entfernungssensors 130 abgetastet. Der Entfernungssensor 130 hat ein vorbestimmtes Sichtfeld, das einen Ausschnitt des Umfelds 110 definiert, in dem die Abtastung stattfindet. Optional erfolgt eine weitere Abtastung mittels des weiteren Sensors 135, dessen Sichtfeld dem des Entfernungssensor 130 entsprechen oder dieses umfassen kann. Eine Abtastung des Entfernungssensors 130 bezieht sich bevorzugt auf einen Zeitpunkt oder einen Zeitbereich, der so kurz ist, dass er als Zeitpunkt angesehen werden kann. Dabei umfasst eine Abtastung eine Vielzahl Messungen, wobei jeder Messung eine zweidimensionale Richtung und eine Entfernung zugeordnet sind. Die zweidimensionale Richtung kann als Elevation und Azimut ausgedrückt werden.

In einem Schritt 210 können Messungen verworfen werden, die über einer vorbestimmten Elevation liegen, die auch Horizont genannt werden kann. Der Horizont kann statisch bestimmt sein und beispielsweise eine vorbestimmte Höhe über der Bodenfläche 115 oder eine vorbestimmte maximale Elevation aufweisen. Der Horizont kann auch dynamisch bestimmt werden, insbesondere in Abhängigkeit eines Abstands zum Objekt 105.

In einem Schritt 215 können unter den Messungen einer Abtastung solche gefunden werden, die einer ebenen Fläche des Objekts 105 zugeordnet sind. Dazu können die Messungen analysiert werden oder die Fläche kann auf der Basis der Abtastung des weiteren Sensors 135 bestimmt werden. Optional werden die Messungen in einem Schritt 220 entzerrt. Eine Verzerrung kann durch die Perspektive des Entfernungssensors 130 bezüglich der Fläche bedingt sein. Weitere Verzerrungsgründe können durch eine Bauart des Entfernungssensors 130 begründet sein. Beispielsweise kann ein Linsensystem des Entfernungssensors 130 eine kissen- oder tonnenförmige Verzerrung bedingen.

In einem Schritt 225 können Messungen, der Fläche zugeordnet sind, ausgedünnt werden. Bevorzugt werden Messungen einer Fläche bearbeitet, die sich senkrecht zur Bodenfläche 115 erstreckt. Messungen einer Fläche können in kartesischer Form ähnliche x- und y- Koordinaten und im Wesentlichen gleiche z-Koordinaten aufweisen.

Das Ausdünnen erfolgt in einer ersten Variante zufällig oder pseudo-zufällig. Dabei kann eine vorbestimmte Anzahl nicht systematisch ausgewählter Messungen verworfen werden, die ähnliche x- und y- Koordinaten und im Wesentlichen gleiche z-Koordinaten aufweisen. In einer zweiten Variante erfolgt das Ausdünnen systematisch. Dabei können insbesondere Messungen, deren Koordinaten in einem vorbestimmten Verhältnis zueinander stehen, bevorzugt auf der Basis weiterer Informationen bestimmt werden, die mittels des weiteren Sensors 135 erfasst wurden. Beispielsweise können Messungen mit ähnlichen x- und/oder y-Koordinaten oder solche mit im Wesentlichen gleichen z-Koordinaten ausgewählt werden. Ausgewählte Messungen, die zu der Fläche korrespondieren, können verworfen werden. Andere als diese Messungen werden bevorzugt nicht angetastet.

In einem Schritt 230 kann die ausgedünnte Abtastung bereitgestellt werden. Dabei ist ein Datenformat der vom Entfernungssensor 130 bereitgestellten Informationen bevorzugt unverändert, allerdings fehlen die zuvor verworfenen Messungen. In einer Ausführungsform werden verworfene Messungen auf eine vorbestimmte Weise markiert, um das Datenformat nicht zu stören. Beispielsweise kann eine bestimmte Entfernung einer verworfenen Messung auf einen vorbestimmten Wert gesetzt werden. Dieser Wert kann die Ungültigkeit markieren oder beispielsweise null oder unendlich entsprechen. In einer weiteren Ausführungsform können die Messungen nur als ausgedünnt markiert werden, bleiben aber im bereitgestellten Datenformat erhalten.

In einem Schritt 235 kann die bereitgestellte Abtastung gespeichert oder übermittelt werden. Die Abtastung kann insbesondere zur Bestimmung einer Position des Bodenbearbeitungsroboters 100 bezüglich des Objekts 105, zur Erkennung des Objekts 105 oder zur Erstellung einer Hinderniskarte verwendet werden.

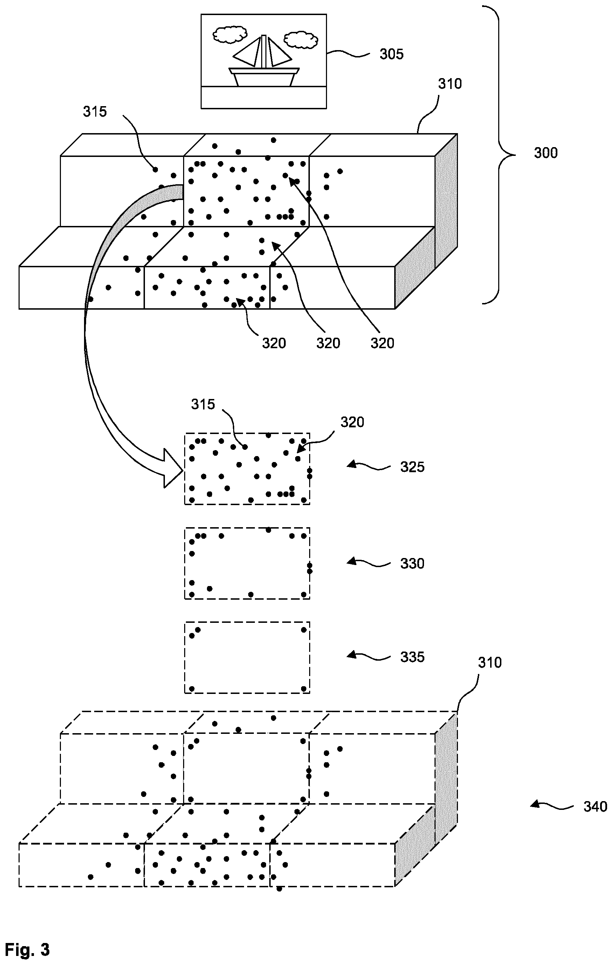

Figur 3 zeigt ein Beispiel für eine Verarbeitung von abgetasteten Informationen nach dem Verfahren 200 von Figur 2, insbesondere mittels einer Vorrichtung 120 nach von Figur 1.

Ein Szenario 300 umfasst eine Vielzahl Objekte 105 in einem Umfeld 110 eines Bodenbearbeitungsroboters 100. In einem oberen Bereich befindet sich exemplarisch ein Bild 305 und in einem unteren Bereich ein Sofa 310. Vom Bodenbearbeitungsroboter 100 aus wird ein Teil des Umfelds 110 mittels des Entfernungssensors 130 abgetastet. Dabei wird eine Vielzahl Messungen 315 durchgeführt, die hier rein exemplarisch pseudo-zufällige Richtungen aufweisen. In der Darstellung von Figur 3 ist jede Messung 315 durch einen dunklen Punkt wiedergegeben. In einem oberen Bereich des Umfelds 110 kann aufgrund seiner Höhe über einer Bodenfläche 115 gar keine Messung 315 durchgeführt werden, sodass das Bild 305 bei der weiteren Verarbeitung unberücksichtigt bleiben kann. Die dargestellten Messungen 315 liegen auf einer Oberfläche des Sofas 310, das beispielhaft mehrere im Wesentlichen ebene Flächen 320 umfasst.

Beispielhaft wird für die weitere Verarbeitung eine der Flächen 320 isoliert; die isolierte Fläche 320 mit den zugeordneten Messungen 315 ist in einer Darstellung 325 gezeigt. Von den dargestellten Messungen 315 sind nicht alle zur Rekonstruktion der Fläche 320 erforderlich. Vorliegend wird beispielhaft eine systematische Reduktion von Messungen 315 auf der Fläche 320 durchgeführt. In der dargestellten Ausführungsform können zunächst einige oder alle Messungen 315 verworfen werden, deren Abstand zu einer Begrenzung der Fläche 320 einen vorbestimmten Mindestabstand überschreitet. Eine Darstellung 330 zeigt das Ergebnis dieser Operation.

Ferner können Messungen 315 im Bereich der Begrenzung verworfen werden, falls diese polygonal ist und die Messungen nicht an Ecken der Begrenzung liegen. Eine Darstellung 335 zeigt ein Ergebnis dieser Operation.

Andere Messungen 315 der Abtastung können unberührt bleiben. Eine Darstellung 340 zeigt die Messungen 315 des Szenarios, wobei einige Messungen im Bereich der gewählten Fläche 320 verworfen wurden. Das Sofa 310 ist zur leichteren Orientierung mit durchbrochenen Linien angedeutet. Die beschriebene Vorgehensweise kann auch mit weiteren Flächen 320 des Objekts 105 durchgeführt werden, wobei noch weitere Messungen 315 verworfen werden können. Selbstverständlich können auch Flächen 320 verschiedener Objekte 105 entsprechend behandelt werden.

Bezugszeichen
- 100: Bodenbearbeitungsroboter
- 105: Objekt
- 110: Umfeld
- 115: Bodenfläche
- 120: Vorrichtung
- 125: Verarbeitungseinrichtung
- 130: Entfernungssensor
- 135: weiterer Sensor
- 140: Speichervorrichtung
- 145: Übermittlungseinrichtung
- 150: Antriebseinrichtung
- 155: Energiespeicher
- 200: Verfahren
- 205: Abtasten Umfeld
- 210: Beschränken Sichtfeld
- 215: Fläche finden
- 220: Entzerren
- 225: Messungen auf Fläche ausdünnen
- 230: Abtastung bereitstellen
- 235: Speichern / Verarbeiten
- 300: Szenario
- 305: Bild
- 310: Sofa
- 315: Messung
- 320: Fläche
- 325: Darstellung
- 330: Darstellung
- 335: Darstellung
- 340: Darstellung

## Patentansprüche

1. Verfahren (200) zum Bereitstellen von Umgebungsdaten eines autonomen Roboters, insbesondere Bodenbearbeitungsroboters (100), wobei das Verfahren (200) folgende Schritte umfasst:
- Abtasten eine Objekts (105) in einem Umfeld (110) des Roboters (100) in einem vorbestimmten Sichtfeld;
- wobei das Abtasten eine Vielzahl Messungen (315) umfasst, die jeweils einen Punkt an der Oberfläche des Objekts (105) bezüglich des Roboters (100) beschreiben;
- Bestimmen (225) von Messungen (315), die einer ebenen Fläche (320) des Objekts (105) zugeordnet sind;
- Verwerfen (225) mehrerer Messungen (315), die der Fläche (320) zugeordnet sind; und
- Bereitstellen (230) der verbleibenden Messungen (315) der Abtastung.

2. Verfahren (200) nach Anspruch 1, wobei eine der verworfenen Messungen (315) einem Punkt auf der Fläche (320) zugeordnet ist, der in einem vorbestimmten Mindestabstand von einer Begrenzung der Fläche (320) liegt.

3. Verfahren (200) nach Anspruch 1 oder 2, wobei eine Begrenzung der Fläche (320) eine Kante aufweist, die sich zwischen zwei Ecken erstreckt, und eine der verworfenen Messungen (315) einem Punkt auf der Fläche (320) zugeordnet ist, der in einem vorbestimmten Mindestabstand von der Ecke liegt.

4. Verfahren (200) nach einem der vorangehenden Ansprüche, wobei die Fläche (320) durch ein Polygon begrenzt ist und eine der verworfenen Messungen (315) im Bereich einer Verbindung von benachbarten Ecken der Fläche (320) liegt.

5. Verfahren (200) nach einem der vorangehenden Ansprüche, wobei eine vorbestimmte Mindestanzahl Messungen (315), die der Fläche (320) zugeordnet sind, erhalten bleiben.

6. Verfahren (200) nach einem der vorangehenden Ansprüche, wobei das Objekt (105) in dem Sichtfeld zusätzlich zweidimensional optisch abgetastet wird, wobei die Fläche (320) des Objekts (105) auf der Basis der optischen Abtastung bestimmt wird.

7. Verfahren (200) nach einem der vorangehenden Ansprüche, wobei sich die Fläche (320) im Wesentlichen senkrecht zu einer durch den Roboter (100) zu bearbeitenden Bodenfläche (320) erstreckt.

8. Verfahren (200) nach einem der vorangehenden Ansprüche, wobei Messungen (315), die höher als ein vorbestimmtes Maß über dem Roboter (100) liegen, verworfen werden.

9. Verfahren (200) nach einem der vorangehenden Ansprüche, wobei auf der Basis der bereitgestellten Messungen (315) einer Abtastung das Objekt (105) erkannt (235) wird.

10. Verfahren (200) nach einem der vorangehenden Ansprüche, wobei auf der Basis der bereitgestellten Messungen (315) einer Abtastung eine Position des Roboters (100) bestimmt (235) wird.

11. Vorrichtung (120) zur Bereitstellung von Umgebungsdaten an Bord eines autonomen Roboters, insbesondere Bodenbearbeitungsroboters (100), wobei die Vorrichtung folgendes umfasst:
- einen Entfernungssensor (130) zur Durchführung einer Abtastung eines Objekts (105) in einem Umfeld (110) des Roboters (100) in einem vorbestimmten Sichtfeld;
- wobei das Abtasten eine Vielzahl Messungen (315) umfasst, die jeweils einen Punkt an der Oberfläche des Objekts (105) bezüglich des Roboters (100) beschreiben; und
- eine Verarbeitungseinrichtung (125), die dazu eingerichtet ist, Messungen (315) zu bestimmen, die einer ebenen Fläche (320) des Objekts (105) zugeordnet sind; mehrere Messungen (315) zu verwerfen, die der Fläche (320) zugeordnet sind; und die verbleibenden Messungen (315) der Abtastung bereitzustellen.

12. Vorrichtung (120) nach Anspruch 11, wobei der Entfernungssensor (130) eine Stereo-Kamera, eine Time-oft-Flight Kamera, ein LiDAR-Sensor oder einen Radarsensor umfasst.
